# EUROPEAN PATENT APPLICATION

(11) **EP 1 416 207 A1**
(43) Date of publication of application: **06.05.2004**
(21) Application number: 02024143.6
(22) Date of filing: 30.10.2002
(51) Int. Cl.: F16K 31/40

(54) **Membrane valve with a pilot solenoid valve**

(71) Applicant: RPE S.R.L., 22076 Mozzate, CO (IT)
(72) Inventor: Fornasari, Paolo, 33084 Cordenons (PN) (IT)
(74) Representative: Dalla Rosa, Adriano

(57) **Abstract**

Solenoid valve to control the liquid flow on different kinds of uses, such as for example irrigation plants, wash basins, household appliances and the like, comprising an electromagnet co-operating with at least a movable core (19) acting against an insert (14') joined with a resilient membrane (9), so as to provide for the displacement from a first operative lowered position thereof, in which the liquid delivery conduit is closed, to a second operative lifted position thereof, in which the delivery conduit (8) is opened. Solenoid valve, whose electromagnet is introduced, together with said movable core (19), into a box-like envelope (35) immersed in the liquid internally the solenoid valve, and joined firmly with the membrane insert (14') and slidable alternately in the solenoid valve together with both said membrane (9) and said membrane insert (14'), from said first to said second operative position thereof, and vice versa.

## Description

The invention relates to a solenoid valve, which can be utilized to control the liquid flow on different kinds of uses, such for example irrigation plants, wash basins, household appliances and the like.

Solenoid valves to control liquid flow for different uses are known, which are assembled on to the liquid delivery conduits and substantially comprise a valve member situated on the liquid flow path and which can be operated by an electromagnet from a conduit closed position, in which the liquid flow toward the delivery zone is stopped, to an opened position in which such flow toward the delivery zone is permitted.

The valve member of this kind of solenoid valves is shaped like a resilient membrane made of elastomeric material, which is secured tightly with its peripheral edge to the liquid inlet conduit, arranged internally the solenoid valve, and shaped centrally with a thickened portion provided with a calibrated through hole for the liquid flow, adapted to co-operate with the delivery conduit free end portion so as to be able to open or close it.

In turn, the electromagnet is provided internally with a movable core, movable by the electromagnet and shaped at its free end portion with a sharpened form, so as to be able to close or open the through hole of the membrane thickened portion In particular, such movable core is displaceable by the electromagnet from an extracted position thereof, in which it is compressed against the the resilient membrane, by closing with its free end portion the calibrated through hole of the membrane and pushing this latter against the free end portion of the delivery conduit, thereby preventing the liquid from passing through such delivery conduit, to a retracted position thereof in which said movable core is moved away from both the membrane and the calibrated through hole, with consequent opening of this latter and lifting of the membrane under the liquid pressure on to the inlet conduit, and liquid passage from the inlet conduit through the delivery conduit.

Therefore, the structural configuration of this kind of solenoid valves requires that the membrane be raised some millimeters with respect to the the free end portion of the delivery conduit, so as to permit the liquid passage, and an additional raising of the core to disengage its sharpened end portion from the calibrated through hole.

As a consequence, the larger stroke required by the movable core involves the presence of an electromagnet with adequately designed electric windings, in order to achieve attraction forces sufficient to displace in a corresponding manner the same movable core, and therefore also higher energetic consumptions. The object of the present invention is to avoid that such drawbacks occur, by means of a solenoid valve made in a compact manner and such as to provide for shorter strokes of the movable core, for performing the same functions of the solenoid valves currently used.

This solenoid valve is made with the structural characteristics substantially described, with particular reference to the attached patent claims.

The invention will be better understood from the following description, given solely by way of not-limitative example and with reference to the accompanying drawings, in which :
- Fig. 1 shows a cutaway front view of a solenoid valve according to the invention, on a first constructive version thereof;
- Fig. 2 shows a front view of the solenoid valve of Fig. 1 on an application position thereof ;
- Fig. 3 shows a cutaway front view of a solenoid valve according to the invention, on a second constructive version, and displaced on an operative position thereof ;
- Fig. 4 shows, with the same view, the solenoid valve of Fig. 3 displaced on another operative position thereof.

The above Figures schematically represent a solenoid valve 5 according to the invention, which is utilized to control the liquid flow on different kind of uses, such as for example irrigation plants, wash basins, household appliances and the like.

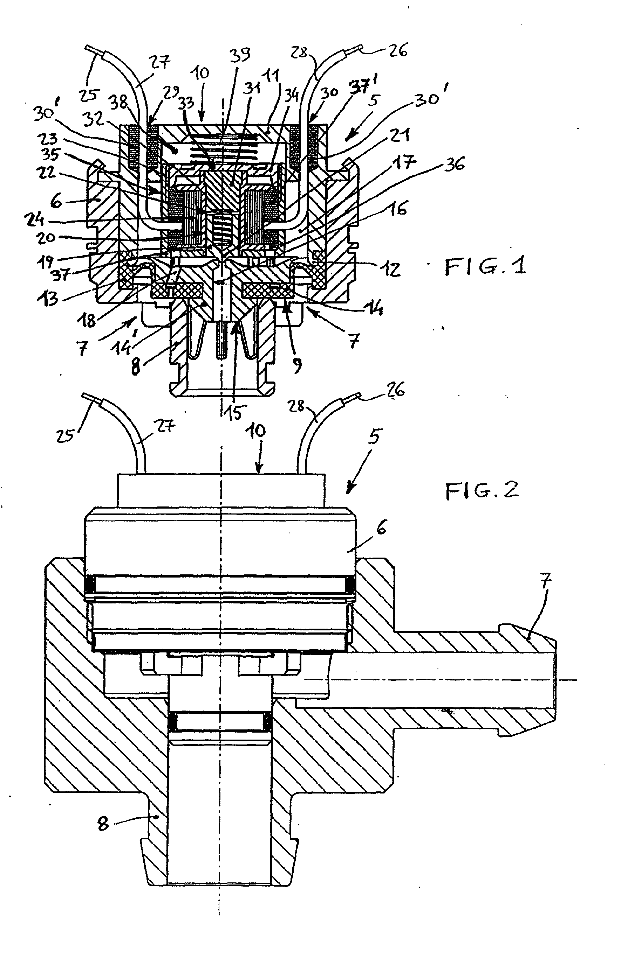

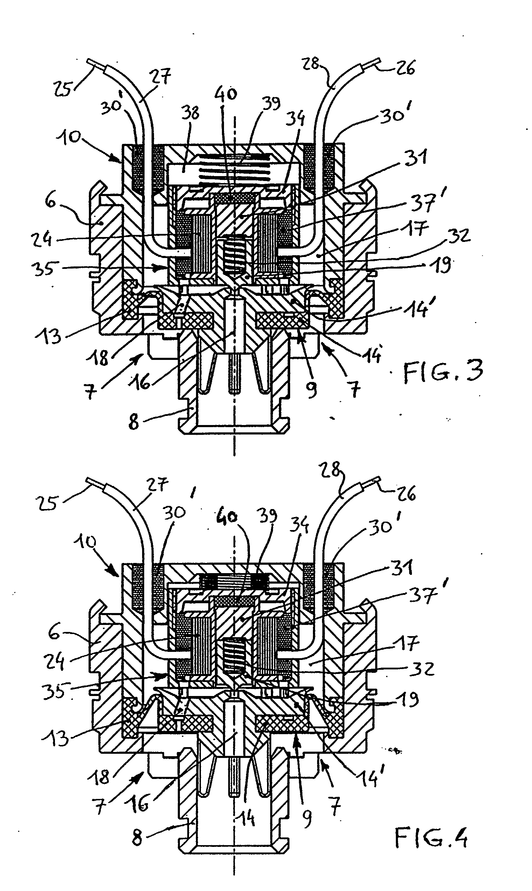

This solenoid valve is represented on Figs. 1 and 2 with the classic monostable version, and on Figs. 3 and 4 with the bistable version, as it will be described later on.

With reference to the solenoid valve monostable version of Figs. 1 and 2, it is noted that such solenoid valve is substantially constituted by a box-like envelope 6 joined at its lower side with a liquid inlet conduit 7 and a delivery conduit 8 (see Fig. 2), said box-like envelope being shaped hollow internally so as to to house a resilient membrane 9 made of adequate elastomeric material at its lower side, and a closing part 10 at its upper side, which part is shaped with an upper closing plate 11 ensuring the tight sealing of the box-like envelope 6 and provided with a lower peripheral edge 12 which can fit a corresponding peripheral edge 13 of the resilient membrane 9, by locking it tightly on to the position. In turn, the resilient membrane 9 is shaped with a central thickened portion 14 having a plastic insert 14' included therein, the lower side 15 of which is housed partially on to the liquid delivery conduit 8, and which is provided with a calibrated through hole 16 for the liquid flow, and is adapted to co-operate with the free end portion of the delivery conduit 8 so as to be able to close or open it, thereby preventing or permitting the liquid passage through such conduit. The so shaped resilient membrane delimites an inner room 17 between the same mebrane and the inner surfaces of the upper closing part 10. Finally, such resilient membrane is also provided with a side calibrated through hole 18 for the liquid passage from the inlet conduit 7 in the inner room 17, which determines a water pressure balance in to the same room.

Furthermore, the solenoid valve referred to is constituted by a movable core 19 of reduced size, formed by a cylindrical body 20 terminating with a lower sharpened end portion 21 adapted to co-operate with the calibrated through hole 16 of the membrane insert 14', said movable core being housed and slidable alternatively with a short stroke in to the axial inner cavity 22 of a magnetic yoke 23 of the electromagnet, which is made preferably of magnetic inoxidable steel, onto which at least an electric coil 24 of the same electromagnet is wound, the terminal voltage supply conductors 25 and 26 and the relative insulating sheaths 27 and 28 of which are passing tightly through corresponding through holes 29 and 30, provided through the upper closing plate 11, with the interposition of adequate sealing material 30' of per se known type.

Moreover, in the inner cavity 22 is housed a stationary core 31, slightly spaced away from the movable core 19 and joined with this latter by means of a spring 32, and such stationary core bears with its upper terminal surface 33 against a corresponding closing wall 34 enclosing at the upper side the electromagnet and turned toward the opposite surface of the upper closing plate 11 of the solenoid valve, and moved away from the same plate. In this way, thanks to the fact to slide into the electromagnet inner cavity 22, acting as guide member of the same core, it is possible to avoid the use of a particular guide cylinder made of plastic material (so-called funnel) enclosing the movable core, and in turn contained internally the electromagnet magnetic yoke, as it happens for the current solenoid valves. This involves the advantage, besides of eliminating a constructive component acting as guide member for the stroke of the movable core, to reduce the sizes of the electromagnet yoke and to need lower electric power for the displacement of the same movable core.

The peculiar characteristic of the invention consists in that the assembly formed by the electromagnet unit (magnetic yoke 23 and electric coil 24) and the movable core 19 and stationary core 31 is contained in the solenoid valve inner room 17 where also the resilient membrane 9 is contained, however in this case such an assembly is introduced internally a box-like container 35 immersed into the liquid of said inner room and formed by a peripheral wall 36, a lower wall 37 and the above mentioned upper closing wall 34, which are joined tightly to each other, while in turn the lower wall is joined firmly to the plastic insert 14' of the resilient membrane 9 situated below it. Besides, the box-like container 35 is provided internally with suitable seal material 37' such as for example impregnating resin, which is distributed around all the component parts of the above assembly, thereby ensuring the sealing with respect to the liquid contained in the inner room 17. Finally, such box-like container 35 is slidable alternately with a short stroke into a cavity 38 delimited on to the upper closing plate 11, and such sliding occurs with the upper side of the peripheral wall 36 of the same container, whose sizes are adapted to the sizes of such cavity 38, and with the aid of a return spring 39 housed within such cavity and interposed between the closing plate 11 and the upper closing wall 34 of the box-like container 35.

During the alternate sliding of the box-like container 35, the electromagnet may be always supplied from the outer electric main , thanks to the fact that the electric conductors 25 and 26 and the relative insulating sheaths 27 and 28 are made flexible, and therefore while their portions passing through the seal material 30' cannot be displaced, their portions situated internally the box-like container 35 may be bent during the displacement of the box-like container 35 in the various positions thereof, Therefore, it appears evident the operation of the present solenoid valve.

On the solenoid valve closing position, shown on Fig. 1, the movable core 19 is pushed by the spring 32 on the extracted position thereof and displaced downward, by compressing its sharpened end portion 21 fully on the mouth of the through hole 16 of the membrane insert 14', by closing it, and compressing such membrane completely downward against the free end portion of the delivery conduit 8, under the condition in which the liquid passage from the inlet conduit 7 to the delivery conduit 8 is prevented, while in turn the return spring 39 is released by pushing completely downward the box-like container 35. Conversely, on the solenoid valve opened position (not shown), the movable core 19 is operated by the electromagnet on the retracted position thereof, displaced upward, with such a force as to determine its end of stroke displacement, under the condition in which a slight lifting of the sharpened end portion 21 of said movable core from the mouth of said through hole 16 is determined, thereby permitting the passage through this latter of the liquid contained in the inner room 17. Under these circumstances, the introduced liquid pushes the resilient membrane 9 upward, by lifting it fully upward, with respect to the delivery conduit 8, and thereby permitting the liquid to pass from the inlet conduit to the same delivery conduit. Consequently, also the box-like container 35 is lifted correspondingly upward, and therefore compresses the spring 39 against the closing plate 11. In this way, thanks to the fact that the movable core 19 is arranged slidable in the inner cavity 22 of the electromagnet, which is situated internally the box-like container 35 approached to the membrane insert 14', such a movable core performs a shorter stroke with respect to the movable core of the current solenoid valves, so as to determine both the lowering of the membrane on its closing position and the lifting thereof on its opened position, so that this solution makes it possible to design the electromagnet for smaller electric power and energetic consumptions of the electromagnet. Furthermore, the solenoid valve referred to may be made with smaller overall size, which makes easier the installation on more restricted spaces and with smaller consumption of materials for the construction thereof.

Figs. 3 and 4 show now a second constructive version of the present solenoid valve, of the bistable type, which is substantially made with the same characteristics of the preceding solenoid valve, so that the components identical to those of the preceding solenoid valve are here marked with the same reference numerals. However, in this case the solenoid valve is constituted also by a permanent magnet 40 which is secured between the stationary core 31 and the opposite closing wall 34 of the box-like envelope 35, and the presence of both such permanent electromagnet 40 and the electromagnet electric coil 24, which is supplied electrically by either positive or negative pulses, determines as usual the displacement of the movable core 19 from its operative closing position (see Fig. 3) to its opened position (see Fig. 4), in the same manner and for the same scopes and advantages as described above.

## Claims

1. Solenoid valve to control the liquid flow on different kind of uses, such as for example irrigation plants, wash basins, household appliances and the like, comprising a box-like envelope joined with a liquid inlet conduit and a delivery conduit, and shaped hollow internally by defining an inner room for housing at least a resilient membrane provided with at least a calibrated through hole for the liquid flow into said inner room, so as to balance the pressure, and joined centrally with an insert made of plastic material provided centrally with a calibrated through hole communicating with said delivery conduit, the solenoid valve also comprising at least an electromagnet in case associated with at least a permanent magnet and co-operating with at least a movable core, adapted to be displaced from an extracted position thereof, by means of resilient means associated with the same movable core, in which it acts against said membrane insert by closing the mouth of the relative calibrated through hole and providing for the displacement of said membrane on a first operative lowered position thereof, in which said delivery conduit is closed and the liquid passage from said inlet conduit to said delivery conduit is prevented, to a retracted position thereof, under the action of said electromagnet, in which the mouth of the calibrated through hole of said membrane insert is opened, and the introduced liquid causes said membrane to be displaced on a second operative lifted position thereof, in which the liquid passage from said inlet conduit to said delivery conduit is permitted, the solenoid valve being **characterized in that** said electromagnet is introduced, together with said movable core (19), into container means (35) immersed in the liquid of said solenoid valve inner room (17), and closed tightly with respect to the same liquid and joined firmly with said membrane insert (14'), said container means (35) being slidable alternately into said inner room (17), together with both said membrane (9) and said membrane insert (14'), from said first to said second operative position thereof, and vice versa.

2. Solenoid valve according to claim 1, **characterized in that** said movable core (19) is housed and slidable alternately with a short stroke in the axial inner cavity (22) of a magnetic yoke (23) of said electromagnet, in which also at least a stationary core (31) is housed, which is slightly moved away from said movable core (19) and joined with this latter by means of resilient means (32), as well as is bearing against a corresponding wall (34) of said container means (35).

3. Solenoid valve according to claim 2, **characterized in that** said electromagnet is provided with voltage supply electric conductors (25, 26) of flexible type, covered by relative insulating sheaths (27, 28) passing through said solenoid valve box-like envelope (6), with the interposition of per se known sealing material (30').

4. Solenoid valve according to claim 2, **characterized in that** said container means (35) are filled internally with adequate seal material, such as for example impregnating resin of per se known kind.
